# EUROPEAN PATENT SPECIFICATION

(11) **EP 1 939 386 B1**
(45) Date of publication and mention of the grant of the patent: **02.01.2013**
(21) Application number: 08075019.3
(22) Date of filing: 08.01.2008
(51) Int. Cl.: E06B 1/60, F16B 2/14, F16B 43/00

(54) **Wedge with a slot**
Keil mit Schlitz
Cale à fente

(43) Date of publication of application: 02.07.2008
(73) Proprietor: Nielsen, Nina, 2970 Hoersholm (DK)
(72) Inventor: Nielsen, Nina, 2970 Hoersholm (DK)

(56) References cited:
- WO-A-98/35164
- DE-U1- 9 405 295
- DE-U1-202006 015 053
- US-A- 4 688 363

## Description

This invention relates to a wedge that consists of two wedges with one truncated pyramid in-between the wedges.

### Background:

Wedge to fill small gaps or spaces between objects has been used in construction work for a long time. A wedge has two surfaces (upper and lower surface), two sides (right and left side) and two ends (front and rear end). Usually a wedge has a tapered body where one end (for example the rear end) is thicker than the other end (the front end). Wedge can be used singly, in pair or in pairs. Viewed from the top, the section of the most frequently used wedge is a rectangle where the two opposite sides are parallel.

In EP0127021, EP0171545, DE9112961U, DE8322420U, DE8808202U, EP0719953 and W02005069722, the wedge is supplied with an inserting slot in the middle. The slot opens to the thinner end. From the slot base, the wedge is divided into two separated parts and has thus a U-shape. The two separated parts can be called two legs, and the part of the wedge that is not separated by the slot can be called head.

In the case where the wedge is moulded in plastic, and where the length of wedge (measured between the two ends) is much longer than the width of the wedge (measured between the two sides), and where the two legs are much longer than the head, there is a tendency that the two wedge-legs move away from each other during the cooling stage. After cooling, the wedge, viewed from top, has the shape of an isosceles trapezoid where the two opposite sides are angled and inclined outwards. This is not desired in the situation where it is required that the wedge must be rectangular. One example hereof is an embodiment of EP0891495 (Fig. 1 and Fig. 4) where the wedge is supplied with interfitting guide formations such as ridges (12, 31, 22 and 34) and grooves (29, 17, 37 and 15) on both of its surfaces and on both of its legs. It will be difficult to fit the ridges of one wedge into the grooves of another wedge if the legs become inclined and angled and thus not paralelled.

### The invention:

In recognition of the disadvantages of the state of the art which could be found in EP0891495, it is an object of the invention to provide a moulded plastic wedge where the legs are kept paralleled after cooling.

The object is achieved in the invention by making a wedge according to claim 1.

A truncated pyramid is a pyramid where the apex is replaced by a plane section and especially by one parallel to the base. A truncated pyramid has thus a top and a base where the top is always smaller than the base.

When two wedges that are of the same size and shape and that are longer than the truncated pyramid are connected to the truncated pyramid, side by side with the truncated pyramid in-between them, and with the base of the truncated pyramid and the rear (and thicker) ends of the two wedges on the same or almost same plane, a new wedge is formed. The front (and thinner) ends of the two original wedges that are not combined by the truncated pyramid become legs of the new wedge, and the rear (and thicker) ends of the two original wedges that are combined by the truncated pyramid become the head of the new wedge. The section of the new wedge is an isosceles trapezoid viewed from top with the two opposite legs angled and inclined to each other.

Due the U-shape of the wedge, the legs will move away from each other during the cooling process under moulding production. The movement will stop only if the balance of tension and relaxation in both the wedge-legs and the wedge-head is achieved. If the truncated pyramid is designed with the right proportion between the size of the top and the size of the base, the two legs will, after stopping its movement, be in a paralleled position, and the section of the moulded plastic wedge will be a rectangle viewed from top.

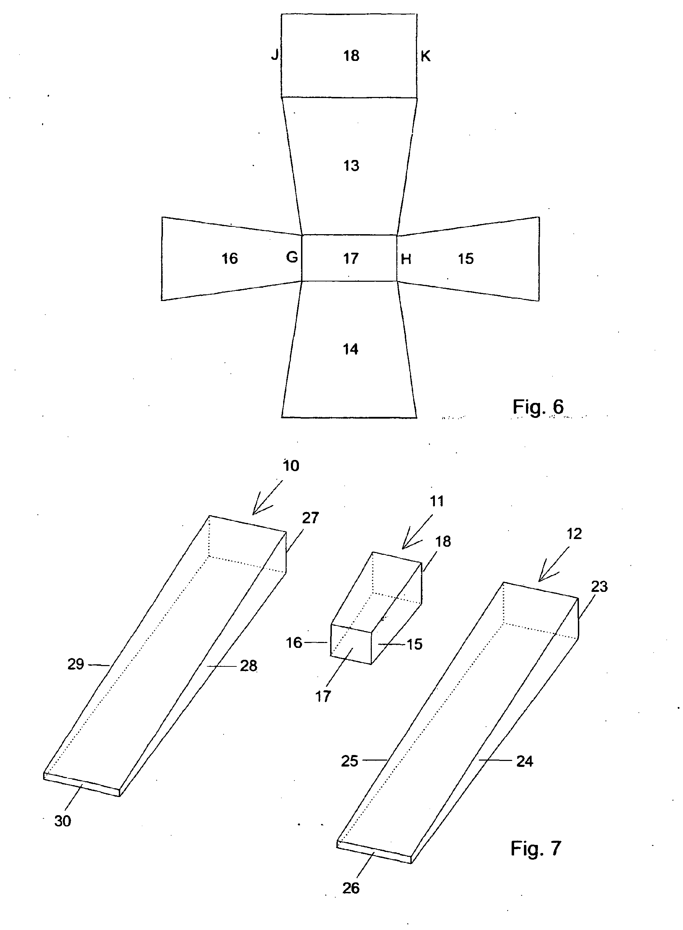

The present invention will be explained in detail in the following with reference to embodiments and drawings which are:

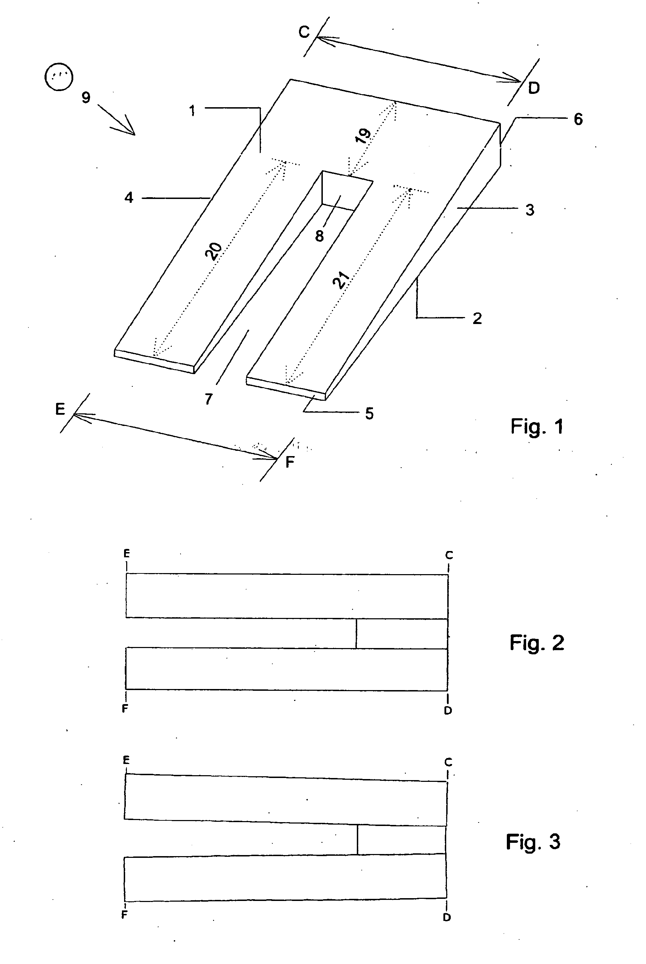

**Fig. 1-2****-3:** The figures show a most frequently applied wedge with an inserting slot.
   Fig 1 is a perspective view of such a popular wedge (9) that has two surfaces (upper surface 1 and lower surface 2), two sides (right side 3 and left side 4), two ends (front end 5 and rear end 6) where the rear end (6) is thicker than the front end (5) and an inserting slot (7) opening towards the front end (5). From the slot base (8), the wedge is divided into two separated parts and has thus a U-shape. The two separated parts are legs (20, 21), and the part of the wedge that is not separated by the slot is head (19).
   Fig. 2 is a plan view of the wedge. Viewed from top, the section of the wedge is a rectangle where the two opposite legs are parallel. Width of the front ends (EF) is equal to the width of the rear ends (CD).
   Fig. 3 is a plan view of the same wedge moulded in plastic and cooled. During the cooling process under moulding production, the legs have moved themselves away from each other due to the U-shape of the wedge and the unbalance between the tension and relaxation in the wedge body. Viewed from top, the section of the moulded and cooled wedge is an isosceles trapezoid where the two opposite legs are angled and inclined outwards. Width of the front ends (EF) is bigger than the width of the rear ends (CD).

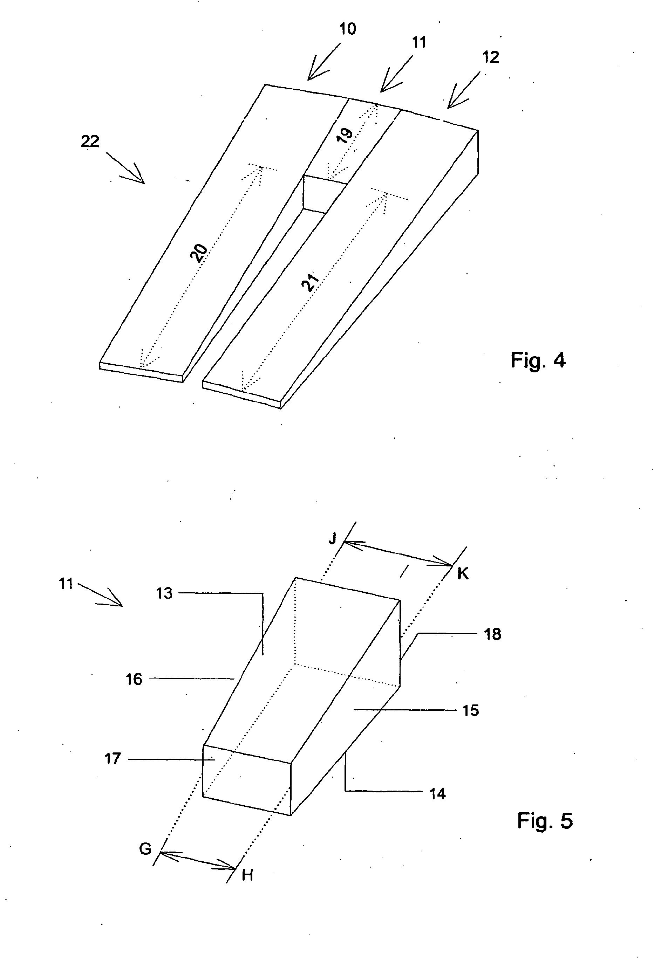

**Fig. 4-8****:** The figures show an embodiment of the present invention made from plastic.
   Fig. 4 is a perspective view of the said wedge (22). It consists of two smaller wedges (10, 12) and one truncated-pyramid (11). The two smaller wedges of the same size, shape and direction are longer than the truncated pyramid and are connected to the sides of the truncated pyramid in such a way, that the truncated pyramid is in the middle of the two smaller wedges and the base of the truncated pyramid and the rear ends of the two smaller wedges are on the same plane.
      The front ends of the two smaller wedges that are not combined by the truncated pyramid become legs (20, 21) of the wedge. The truncated pyramid and the rear ends of the two smaller wedges that are combined by the truncated pyramid become the head (19) of the wedge.
   Fig. 5 is an enlarged perspective view of the truncated pyramid (11). A truncated pyramid is a pyramid where the apex is replaced by a plane section (17) and especially by one parallel to the base (18). A truncated pyramid has thus a top (17) and a base (18). The top (17) is always smaller than the base (18). In this embodiment, the width of the top (GH) is smaller than the width of the base (JK).
      Furthermore, the truncated pyramid has an upper surface (13), a lower surface (14), a right side (15) and a left side (16). The 2 surfaces, 2 sides, 1 top and 1 base of the truncated pyramid in the embodiment are folded out in Fig. 6.
   Fig. 7 is a perspective view of the 3 components (10, 11, 12) of the said embodiment. The base (18) of the truncated pyramid (11) is on the same plane as the rear ends (27, 23) of the two smaller wedges (10, 12). The top (17) of the truncated pyramid (11) points towards the front ends (30, 26) of the two smaller wedges (10, 12). The right side (15) of the truncated pyramid (11) connects to the left side (25) of the right wedge (12), and the left side (16) of the truncated pyramid (11) connects to the right side (28) of the left wedge (10).

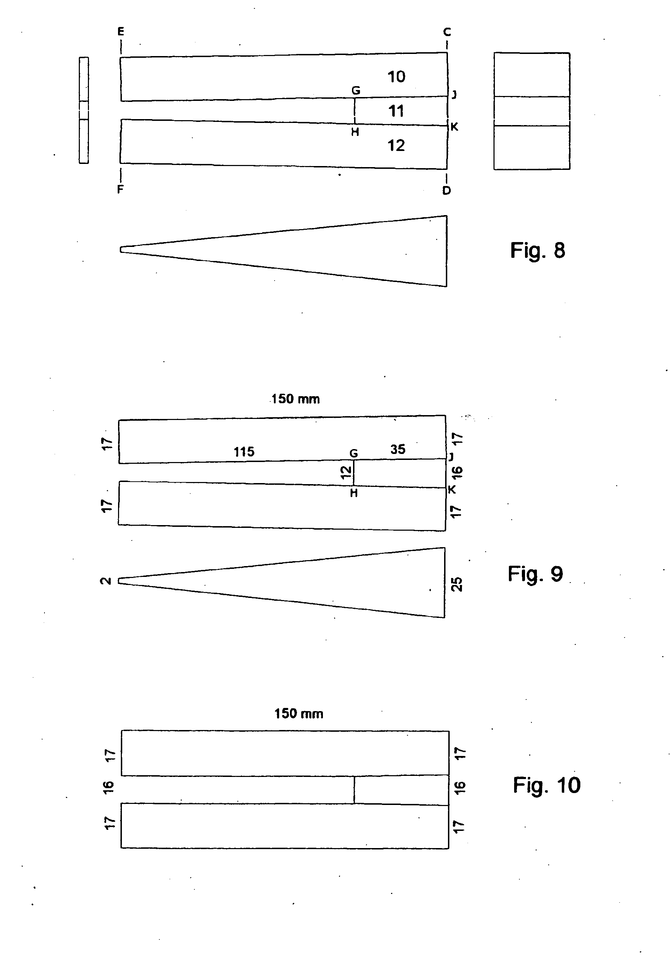

   Fig. 8 shows a plan view (middle), a side view (down), a rear end view (right) and a front end view (left) of the said embodiment. The section of the wedge is an isosceles trapezoid viewed from top, and the two opposite legs are angled and incline to each other. Width of the front ends (EF) is smaller than the width of the rear ends (CD).
      During the cooling process under moulding production, the two opposite legs of the wedge will move away from each other due to the U-shape of the wedge. The movement will stop only if the balance of tension and relaxation in both the wedge-legs and the wedge-head is achieved.
**Fig. 9-10****:** The figures show a concrete example of the embodiment given in Fig. 4-8. The wedge in the example is moulded in hard PE.
   In Fig. 9 the size of the example is given in millimetre. The top of the truncated pyramid (GH) is 4 mm narrower than the base (JK), which makes the wedge in the example an isosceles trapezoid viewed from top.
Fig. 10 shows the wedge of the size given in Fig. 9 after cooling. The legs of the wedge become paralleled, and the section of the wedge is a rectangle viewed from top.
   The example given in Fig. 9 and 10 is tested and the result is good. But the same size and proportions can give a different result all depending on the shaping of the wedge and the shaping and location of the truncated pyramid.
**Fig. 11-17****:** The figures show other embodiments of the said wedge.

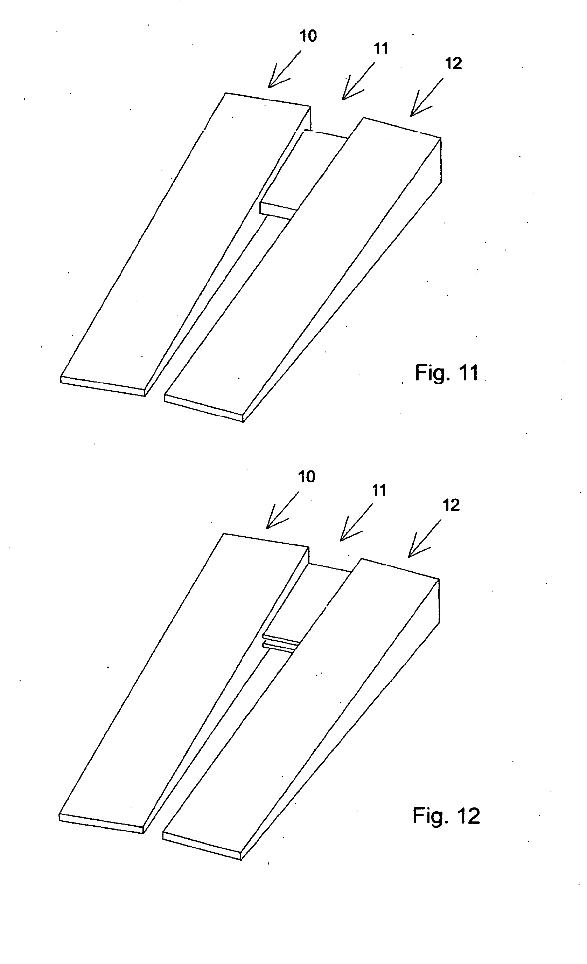

   Fig. 11 is a variation of the said wedge where the truncated pyramid (11) is thinner than the connected bodies of the two smaller wedges.
   Fig. 12 is a variation of the said wedge where the truncated pyramid (11) is divided into two horizontally parallel pieces.

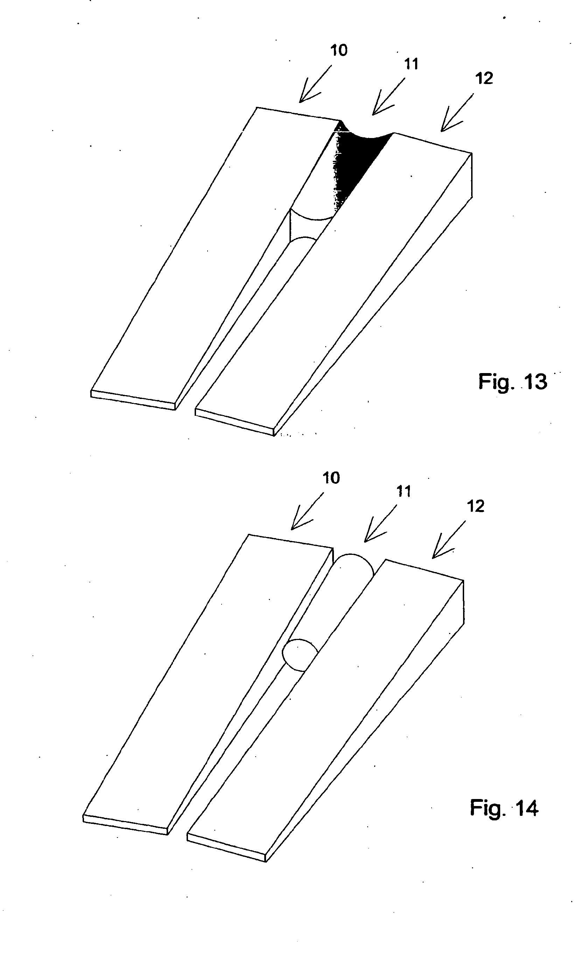

   Fig. 13 is a variation of the said wedge where the truncated pyramid (11) has irregular surfaces.
   Fig. 14 is a variation of the said wedge where the truncated pyramid (11) is a conic.

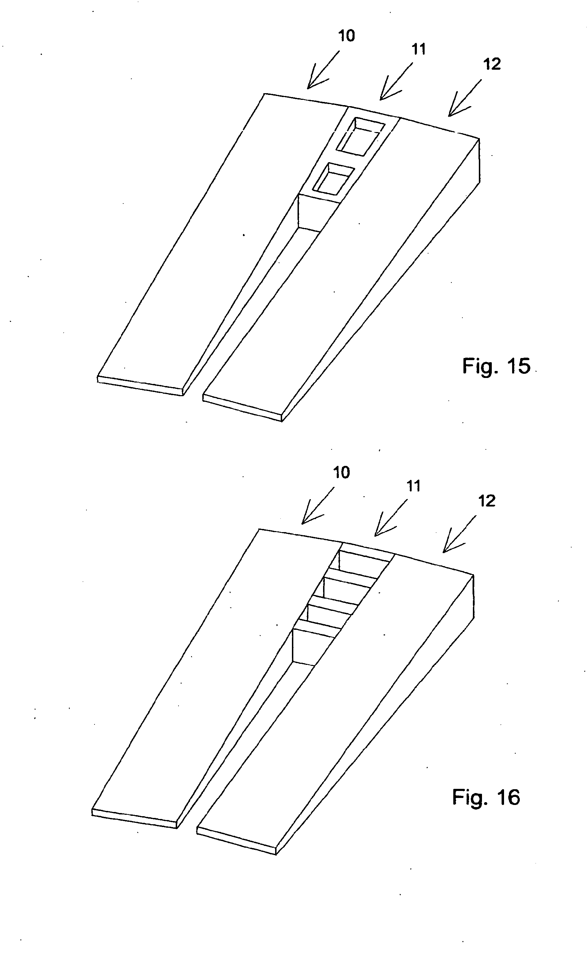

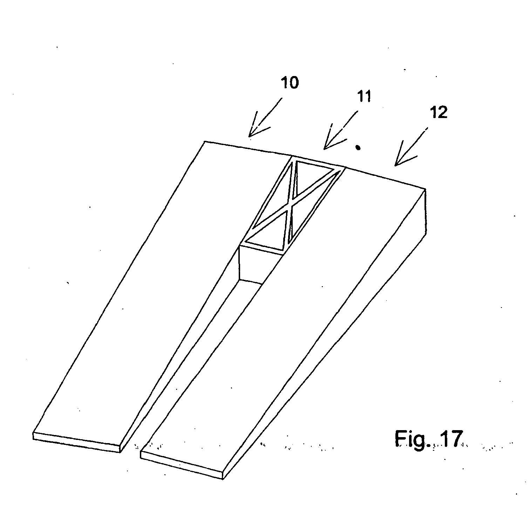

   Fig. 15-16-17 is 3 variations of the said wedge where the truncated pyramid (11) is hollowed or partly hollowed.

## Claims

1. Wedge (22) consisting of two smaller wedges (10,12) of same size, shape and direction, which smaller wedges are connected to each other by a truncated pyramid (11) which is shorter than the two smaller wedges (10,12) and located in the middle of the two smaller wedges (10,11), the truncated pyramid (11) having a base (18) in the at least approximately same plane as the rear ends of the smaller wedges (10,12) such that the front ends of the smaller wedges (10,12) become legs (20,21) of the wedge (22), the section of the wedge (22) being an isosceles trapezoid viewed from the top, **characterised in that** the wedge is made by plastic moulding such that the two legs (20,21 are angled and inclined to each other during the moulding process and become parallel when the moulded plastic wedge (22) is cooling.

2. A wedge according to claim 1, wherein the truncated pyramid (11), which is a pyramid where the apex is replaced by a plane section and especially by one parallel to the base, has a top (17) and a base (18), and the area of top (17) is always smaller than that of the base (18).

3. A wedge according to claim 1, wherein the truncated pyramid (11) has regular or irregular surfaces (13,14), regular or irregular sides (15,16), a regular or irregular top (17), and a regular or irregular base (18).

4. A wedge according to claim 1, wherein the truncated pyramid has parallel or unparallel surfaces, parallel or unparallel sides (15,16), and a top (17), which is parallel or unparallel to the base (18).

5. A wedge according to claim 1, wherein the truncated pyramid (11) is a combination of two or more truncated pyramids, or two or more other regular or irregular shapes.

6. A wedge according to claim 1, wherein the truncated pyramid is hollow, partly hollow or not hollow.

## Revendications

1. Une cale (22) composée de deux cales plus petites (10,12) de taille, forme et direction identiques. Les deux petites cales étant connectées entre elles par une pyramide tronquée (11) plus petite que les deux cales précédentes (10,12) et située au milieu de ces dernières (10,11). La pyramide tronquée (11) a une base (18) située presqu'au même niveau que les extrémités arrières des petites cales (10, 12) de manière à ce que les extrémités avant des petites cales (10,12) deviennent les pieds (20,21) de la cale (22). La section de la cale (22) étant elle-même un trapèze isocèle vu du dessus. Une des propriétés de la cale (22) est qu'elle est constituée d'un moule en plastique construit afin que les deux pieds (20, 21) soient inclinés d'un **certain** angle l'un de l'autre pendant le processus de moulage pour devenir ensuite parallèle l'un à l'autre lorsque la cale en plastique (22) ainsi formée est refroidie.

2. Une cale (selon les droits cités en partie 1) où la pyramide tronquée (11) est une pyramide ayant le sommet remplacé par une section plane parallèle à la base. Cette pyramide possède un haut (17) et un bas (18) et la surface de la partie haute de la pyramide tronquée (17) est toujours plus petite que celle de la partie basse (18).

3. Une cale (selon les droits cités en partie 1) où la pyramide tronquée (11) possède des surfaces régulières ou irrégulières (13,14), des côtés réguliers ou irréguliers (15,16), un sommet régulier ou irrégulier (17) et une base régulière ou irrégulière (18).

4. Une cale (selon les droits cités en partie 1) où la pyramide tronquée possède des surfaces parallèles ou non, des côtés parallèles ou non (15,16), et ayant un sommet (17) qui est parallèle ou non à la base (18).

5. Une cale (selon les droits cités en partie 1) où la pyramide tronquée (11) est une combinaison de deux, ou plus de deux, pyramides tronquées ou de deux, ou plus de deux, formes géométriques régulières ou irrégulières.

6. Une cale (selon les droits cités en partie 1) où la pyramide tronquée est creuse, partiellement creuse ou pleine.

## Patentansprüche

1. Keil (22) bestehend aus zwei kleineren Keilen (10,12) derselben Größe, Form und Ausrichtung, welche kleinere Keile miteinander verbunden sind durch einen Pyramidenstumpf (11) welcher kürzer ist als die zwei kleineren Keile (10,12) und sich in der Mitte der beiden kleineren Keile befindend (10,11), der Pyramidenstumpf (11) eine Basis habend (18) in der mindestens ungefähr selben Ebene als die hinteren Enden der kleineren Keile (10,12) sodass die vorderen Enden der kleineren Keile (10,12) Beine werden (20,21) des Keils (22), der Teil des Keils (22) ein gleichschenkliges Trapez verkörpernd gesehen von oben, charakterisiert dadurch, dass der Keil durch Kunststoff-Spritzguss hergestellt wird sodass die beiden Beine (20,21) abgewinkelt sind und zueinander geneigt während des Gießvorgangs und parallel werden wenn der gespritzte Kunststoffkeil (22) abkühlt.

2. Ein Keil nach Anspruch 1, worin der Pyramidenstumpf (11), welcher eine Pyramide ist, bei welcher die Spitze durch einen planen Teil ersetzt wird und insbesondere durch einen parallel zur Basis, hat eine Spitze (17) und eine Basis (18), und die Fläche der Spitze ist immer geringer als die der Basis (18).

3. Ein Keil nach Anspruch 1, worin der Pyramidenstumpf (11) reguläre oder irreguläre Oberflächen (13,14) besitzt, reguläre oder irreguläre Seiten (15,16), eine reguläre oder irreguläre Spitze (17), und eine reguläre oder irreguläre Basis (18).

4. Ein Keil nach Anspruch 1, worin der Pyramidenstumpf parallele oder unparallele Oberflächen besitzt, parallele oder unparallele Seiten (15,16), und eine Spitze (17), welche parallel oder unparallel ist zur Basis (18).

5. Ein Keil nach Anspruch 1, worin der Pyramidenstumpf (11) eine Kombination aus zwei oder mehreren Pyramidenstümpfen ist, oder zwei oder mehreren anderen regulären oder irregulären Formen.

6. Ein Keil nach Anspruch 1, worin der Pyramidenstumpf hohl, teilweise hohl oder nicht hohl ist.
